(19) Europäisches Patentamt
European Patent Office
Office européen des brevets

(11) **EP 1 476 672 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: **03737298.4**

(22) Anmeldetag: **31.01.2003**

(51) Int Cl.:
**F16D 65/56** (2006.01)    **F16D 55/2255** (2006.01)

(86) Internationale Anmeldenummer:
**PCT/EP2003/000962**

(87) Internationale Veröffentlichungsnummer:
**WO 2003/067114 (14.08.2003 Gazette 2003/33)**

(54) **SCHEIBENBREMSE MIT ELEKTRISCH ANGETRIEBENER NACHSTELLEINRICHTUNG**

DISC BRAKE WITH ELECTRICALLY OPERATED ADJUSTMENT DEVICE

FREIN A DISQUE EQUIPE D'UN DISPOSITIF D'AJUSTAGE A COMMANDE ELECTRIQUE

(84) Benannte Vertragsstaaten:
**AT BE BG CH CY CZ DE DK EE ES FI FR GB GR HU IE IT LI LU MC NL PT SE SI SK TR**

(30) Priorität: **08.02.2002 DE 10205451**
**19.06.2002 DE 10227271**

(43) Veröffentlichungstag der Anmeldung:
**17.11.2004 Patentblatt 2004/47**

(73) Patentinhaber: **KNORR-BREMSE SYSTEME FÜR NUTZFAHRZEUGE GMBH**
**80809 München (DE)**

(72) Erfinder:
• **BAUMGARTNER, Johann**
**85368 Moosburg (DE)**
• **BIEKER, Dieter**
**83080 Oberaudorf (DE)**

(74) Vertreter: **Mattusch, Gundula**
**Knorr-Bremse AG,**
**Patentabteilung V/RG**
**Moosacher Strasse 80**
**80809 München (DE)**

(56) Entgegenhaltungen:
**WO-A-02/14125**       **DE-A- 2 227 390**
**DE-A- 2 603 090**     **DE-C2- 3 610 569**
**GB-A- 1 295 485**     **GB-A- 1 510 106**
**US-A- 2 533 186**     **US-A- 2 655 229**
**US-A- 3 255 847**     **US-A- 3 299 991**
**US-A- 3 371 753**     **US-A- 3 498 421**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine Scheibenbremse nach dem Oberbegriff des Anspruchs 1.

Eine gattungsgemäße Scheibenbremse mit einer hydraulischen Betätigung ist aus der US 3,371,753 bekannt.

Aus der EP 0 688 404 B1 ist eine Schiebesattel-Scheibenbremse bekannt, bei welcher auf einer Seite des Bremssattels eine Zuspannvorrichtung mit einem Drehhebel angeordnet, der um eine zur Ebene der Bremsscheibe parallel verlaufende Drehachse schwenkbar gelagert ist. Bremsscheibenzugewandt liegt dieser mittels eines Exzenters an einer Traverse an, die bezüglich der Bremsscheibe verschiebbar geführt ist und in der zwei mit einem Außengewinde versehene Stellspindeln in Parallelanordnung verstellbar verschraubt sind.

Aus der DE 36 10 569 C2 ist ferner eine Schiebesattel-Scheibenbremse bekannt, bei welcher ein Drehhebel an zwei Enden je einen Exzenter aufweist, von denen jeder mit einem Druckbolzen in Eingriff steht, um eine verschiebbar im Bremssattel gelagerte Bremsbacke bzw. einen Bremsbelag gegen die Bremsscheibe zu drücken, wenn eine Kolbenstange von einem mit Druckmittel beaufschlagbaren Zylinder betätigt wird.

Der Schiebesattel-Bremssattel ist dabei derart ausgelegt, daß es mit dem Verschiebeweg möglich ist, sowohl den Arbeitshub der Bremse bei jeder Bremsung als auch den maximalen Verschleißweg der Bremsbeläge, d.h. den Nachstellweg der Bremse zu überbrücken. Zum Nachstellen des Bremsbelagverschleißes dient eine Nachstellvorrichtung, die auf einer Seite der Bremsscheibe angeordnet ist.

Schwenkbare Scheibenbremsen der eingangs genannten Art sind ebenfalls bekannt. Ähnlich zu den vorstehend genannten Schiebesattel-Scheibenbremsen muß hier der Verschwenkwinkel derart bemessen sein, daß es möglich ist, im Bereich der Bremsbeläge sowohl den Weg des Arbeitshubes zu überbrücken, um den reaktionsseitigen Bremsbelag gegen die Bremsscheibe zu legen und um den im Laufe der Zeit auftretenden Bremsbelagverschleiß durch ein Verschwenken des Bremssattels auszugleichen. Der Bremssattel hat dabei die Aufgabe, die Spannkräfte auf die Bremsbeläge aufzufangen, gleichzeitig die Bremsbeläge zu führen und deren Umfangskräfte über die Befestigung und Drehlagerung des Bremssattels auf die Achse zu übertragen. Nachteilig an Schwenksattelbremsen ist das Herausschwenken des Bremssattels vor allem bei vollem Verschleißhub. Dieser Nachteil wird besonders deutlich an der der Sattellagerung gegenüberliegenden Scheibenseite. Dies bedeutet einen geringeren Scheibenaußendurchmesser und eine geringere Bremsbelagdicke gegenüber Fest- oder Schiebersattelbremsen.

Vor diesem Hintergrund hat die Erfindung die Aufgabe, die Scheibenbremse der eingangs genannten Art derart auszugestalten, daß eine besonders robuste und wartungsfreie Auslegung der Lagerung des Bremssattels realisiert wird, wobei nur der Arbeitshub bewegt werden muß.

Die Erfindung löst diese Aufgabe durch den Gegenstand des Anspruchs 1.

Hierbei handelt es sich um eine konstruktiv einfach realisierbare Scheibenbremse.

Bei dieser Art der Schiebe- oder Schwenklagerung wird durch die auf beiden Seiten der Bremsscheibe vorgesehene Nachstellvorrichtungen der Bremsbelagverschleiß nicht durch die Schiebe- oder Schwenkbewegung sondern durch die beiden Nachstellvorrichtungen ausgeglichen, welche die Bremsbeläge auf beiden Seiten der Bremsscheibe bei Verschleiß näher zur Bremsscheibe hin vorschieben. Hierdurch ist es möglich, den Verschiebeweg oder den Verschwenkwinkel des Schwenksattels derart zu beschränken, daß im Bereich der Bremsbeläge durch die Verschwenkbewegung jeweils nur der maximale Arbeitshub überbrückbar ist.

Zweckmäßig werden zwei der Tragelemente an der Radachse oder Nabe, insbesondere an einem Achsring angeordnet, insbesondere angeformt. Konstruktiv einfach realisierbar und kostengünstig ist es, wenn die Tragelemente bolzenförmig ausgebildet sind und mit einem ihrer Enden an die Radachse oder -nabe angeformt sind.

Kombinierbar ist dies ggf. noch mit einer verschiebbaren Scheibe, welche um einen Teil des Arbeitshubes auf der Radachse verschieblich angeordnet ist. Dies ermöglicht es, den Verschiebeweg oder den Verschwenkwinkel sogar noch kleiner auszulegen.

Durch die elastische Lagerung zwischen Lageraufnahme und Tragelement wird ferner bei dem Schwenksattel ein "Drehlager" im eigentlichen Sinne vermieden, was einerseits eine besonders kostengünstige Realisierung der Schwenksattelfunktion und andererseits eine besonders robuste Ausgestaltung ermöglicht.

Bei einer Schiebesattelbremse ist es zweckmäßig, wenn die Lagerausnehmungen, die Tragelemente und das elastische Zwischenelement jeweils derart ausgerichtet sind, dass jeweils ein elastisches Lager ausgebildet wird, welches koaxial zur Bremsscheibenachse ausgerichtet ist.

Bei einer Schwenksattelbremse ist es dagegen vorteilhaft, wenn jeweils ein elastisches Lager ausgebildet wird, welches senkrecht zur Bremsscheibenachse ausgerichtet ist.

Vorzugsweise ist das Tragelement jeweils relativ zur Lageraufnahme derart beweglich, dass der Verschwenkwinkel oder der Verschiebeweg des Bremssattels (vorzugsweise nur) eine Überbrückung des maximalen Arbeitshubes der Scheibenbremse im Bereich der Bremsbeläge ermöglicht.

Es bietet sich an, wenn die freien Enden von zweien der Tragelemente in Verlängerung einer Kreissehne durch den Achsring an den beiden Schnittstellen der Kreissehne mit den Achsringen angeordnet sind und mit ihren freien Enden voneinander weg weisen, um ein möglichst stabile Konstruktion zu schaffen und dennoch mit einfachen Mitteln die notwendige Schwenkbewegung zu realisieren.

Ganz besonders bevorzugt weisen die Tragelemente radiale Kontaktflächen auf, welche mit entsprechenden Gegenflächen der Lageraufnahmen mit geringem Spiel direkt die Radialkräfte übertragenden Kontakt stehen. Hiermit ergibt sich eine besonders gute Abstützung gegen Kräfte, welche den Bremssattel verdrehen können.

Nach einer weiteren besonders bevorzugten Ausführungsform ist wenigstens ein Zwischenelement kostengünstig als Gummi-Metall-Verbundteil ausgebildet.

Lageraufnahme und Tragelement dürfen sich bereichsweise durchaus berühren. Wichtig ist, daß dennoch abschnittsweise zwischen den beiden Elementen ein elastisches Zwischenelement angeordnet ist.

Vorteilhafte Ausgestaltungen der Erfindung sind den Unteransprüchen zu entnehmen.

Nachfolgend wird die Erfindung unter Bezug auf die beigefügten Figuren näher erläutert. Es zeigt:

| | |
|---|---|
| Figur 1 | eine perspektivische Ansicht eines ersten Ausführungsbeispiels einer Schwenksattel-Scheibenbremse an einem Nabenring; |
| Figur 2 | eine Sprengansicht der Schwenksattel-Scheibenbremse aus Figur 1; |
| Figur 3a-3c | eine Seitenansicht sowie zwei Schnitte durch die Schwenksattel-Scheibenbremse aus Figur 1; |
| Figur 4a-d | eine Rückansicht sowie eine verkleinerte Darstellung der drei Ausschnitte aus Figur 3; |
| Figur 5 | eine weitere Sprengansicht der Elemente aus Figur 2; |
| Figur 6 | eine Seitenansicht eines weiteren Ausführungsbeispiels der Erfindung, |
| Figur 7 | eine Sprengansicht des Ausführungsbeispiels aus Figur 6, |
| Figur 8 | eine weitere Sprengansicht des Ausführungsbeispiels aus Figur 6; |
| Figur 9 | eine Rückansicht sowie einen Schnitt durch das Ausführungsbeispiel der Figur 6; |
| Figur 10 | eine Sprengansicht von Elementen eines weiteren Ausführungsbeispiels der Erfindung; |
| Figur 11a-11c | ein Ausführungsbeispiel der Erfindung in verschiedenen Ansichten, |
| Figur 12 und 13 | Schnitte durch den Verbindungsbereich zwischen Sattel und Achsring eines weiteren Ausführungsbeispiels der Erfindung; |
| Figur 14a | einen Schnitt durch eine weitere Scheibenbremse; |
| Figur 14b | einen Schnitt durch einen veränderten Anbindungsbereich des Bremssattels aus Fig 4 an den Achsring. |

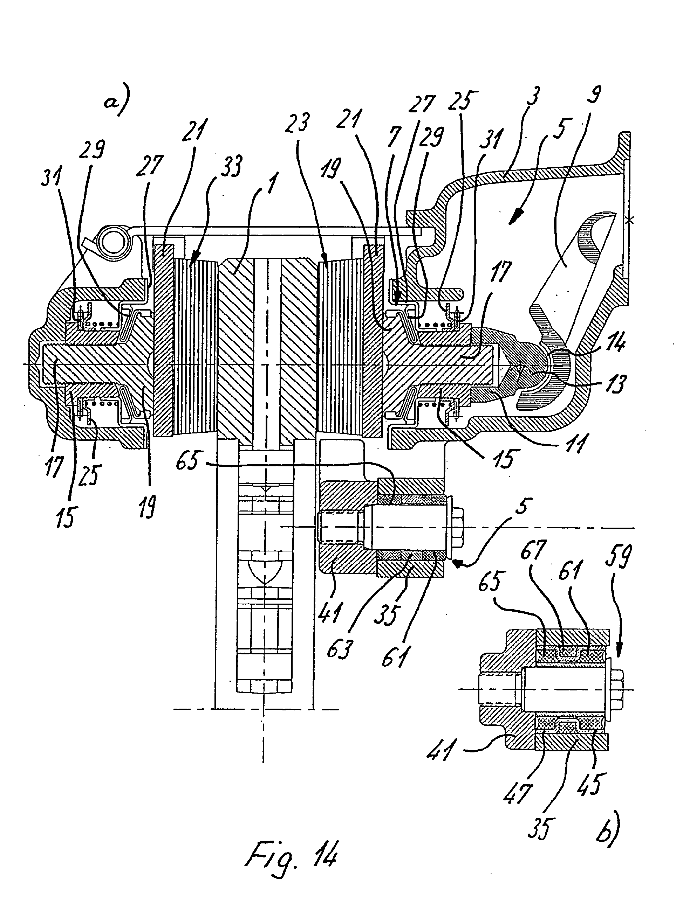

Zunächst sei der prinzipielle Aufbau der Scheibenbremse nach Fig. 14 beschrieben, um beispielhaft den Aufbau einer Scheibenbremse mit Nachstellvorrichtungen auf beiden Stirnseiten der Bremsscheibe zu erläutern.

Fig. 14 zeigt einen Schnitt durch eine Schiebesattel-Scheibenbremse mit einem hier einteiligen, eine Bremsscheibe 1 übergreifenden Bremssattel 3.

Alternativ kann der Bremssattel 3 auch zweiteilig ausgebildet sein (hier nicht dargestellt), wobei die beiden Bremssattelteile dann vorzugsweise mittels Schraubbolzen miteinander verbunden werden und wobei vorzugsweise eines der beiden Bremssattelteile rahmenartig die Bremsscheibe in ihrem oberen Umfangsbereich einfasst und das weitere Bremssattelteil zur Aufnahme einer Zuspannvorrichtung dient, was eine einfache Anpassung der Bremse an Zuspannvorrichtungen verschiedenster Bauart ermöglicht.

Auf der einen Seite der Bremsscheibe 1 ist im Bremssattel 3 eine Zuspannvorrichtung 5 angeordnet, welche durch eine zur Bremsscheibe hin weisende Öffnung 7 des Bremssattels 3 in diesen einsetzbar ist (auch ganz oder teilweise vormontiert).

Die Zuspannvorrichtung 5 weist einen von einer (hier nicht dargestellten) Kolbenstange betätigbaren Drehhebel 9 auf, welcher über hier nicht erkennbare Lagerelemente wie Kugeln und zusätzliche Lagerschalen am Bremssattel 3 abgestützt ist.

Der Drehhebel 9 wirkt an seiner vom Bremssattel 3 abgewandten Seite an einer mittigen Stelle oder vorzugsweise an zwei seitlichen Enden jeweils auf ein Zwischen- bzw. Abstüzelement 11 ein, welches an seinem dem Drehhebel zugewandten Ende einen halbkugelartigen Ansatz 13 aufweist. Zwischen dem Ansatz 13 und dem Drehhebel 9 ist hier eine Gleitlagerschale 14 angeordnet.

Das Zwischenelement 11 stützt sich an der Stirnseite einer Nachstellmutter 15 ab, in die eine Stellspindel 17 eingesetzt, insbesondere eingeschraubt ist, die an ihrem vom Drehhebel 1 abgewandten Ende ein Druckstück 19 trägt, welche an einer Belaghalteplatte 21 eines zuspannseitigen Bremsbelages 23 anliegt.

Wird der Drehhebel 9 durch Vorschieben der Kolbenstange verschwenkt, bewirkt das untere exzenterartige Ende (hier nicht zu erkennen) des Drehhebels 9 ein Vorschieben des Zwischenelementes 11 in Richtung der Bremsscheibe 1. Dabei werden die Nachstellmutter 15 und die Stellspindel 17 mit in Richtung des Bremsbelages 23 gedrückt und der zuspannseitige Bremsbelag 23 in Richtung der Bremsscheibe 1 verschoben.

Die Nachstellmutter 15 und die Stellspindel 17 sind in zwei Halteplatten 25, 27 eingesetzt. Eine faltenbalgartige Dichtung 29 dichtet den Raum zwischen der einen Halteplatte 25 und dem Druckstück gegen ein Eindringen von Schmutz und Feuchtigkeit ab.

Auf der Nachstellmutter ist ein Zahnrad 31 relativ zur Nachstellmutter unverdrehbar befestigt. Das Zahnrad kann über weitere Getriebeglieder wie weitere Zahnräder insbesondere von einem hier nicht dargestellten Elektromotor betätigt werden, um den durch Bremsungen verursachten Bremsbelagverschleiß auszugleichen.

Wird die Nachstellmutter 15 verdreht, wird die Stellspindel 17 relativ zur Nachstellmutter 15 axial bewegt und damit das Lüftspiel zwischen Bremsbelag und Bremsscheibe verändert. Alternativ ist auch eine Betätigung über eine zwischen Drehhebel 9 und Nachstellmutter 15 geschaltete Koppelmechanik denkbar (hier nicht dargestellt)

Bevorzugt sind zwei der Nachstelldrehantriebe aus Nachstellmutter 15 und Stellspindel 17 auf der Seite der Zuspannvorrichtung 5 nebeneinander angeordnet, so dass der Bremsbelag an zwei Stellen mit Druck beaufschlagt wird.

Zwei weitere Nachstelldrehantriebe mit einem vorzugsweise eigenen elektromotorischen Antrieb sind auf der von der Zuspannvorrichtung abgewandten Seite der Bremsscheibe 1- der Reaktionsseite - im Bremssattel 3 angeordnet. Auch diese Nachstelldrehantriebe weisen jeweils eine Nachstellmutter 15 und eine Stellspindel 17 auf, die es ermöglichen, das Druckstück 19 in Richtung des auf der Reaktionsseite der Bremsscheibe 1 angeordneten Bremsbelages 33 in Richtung der Bremsscheibe 1 zu verschieben.

Die Einstellung des Lüftspieles erfolgt vorzugsweise rechnergesteuert.

Da auf jeder Stirnseite der Bremsscheibe 1 jeweils wenigstens eine eigene Nachstellvorrichtung - hier jeweils bestehend aus zwei Nachstelldrehantrieben mit elektromotorischem Antrieb - angeordnet ist, ist es möglich, den Bremssattel 3 hier als einen Schiebe oder Schwenksattel auszubilden, dessen Schiebeweg oder Schwenkwinkel derart bemessen ist, dass mit ihm weniger als der maximale Nachstellweg, insbesondere sogar lediglich der maximale Arbeitshub beim Zuspannen der Bremse überbrückbar ist.

Zu diesem Zweck ist der Bremssattel 3 an einer Radachse oder -nabe relativ zu dieser verschwenk oder verschiebbar befestigt. Ergänzend kann auch die Bremsscheibe 1 verschieblich an der Radachse oder -nabe befestigt sein.

Da der zu überbrückende Verschiebeweg oder Verschwenkwinkel kleiner als der Verschiebeweg oder der Verschwenkwinkel ist, den ein vergleichbarer Bremssattel nach dem Stand der Technik überbrücken mußte, bei dem nur auf einer Seite der Bremsscheibe 1 eine Nachstellvorrichtung angeordnet war, ergibt sich die überraschende Möglichkeit dazu, die Verschiebbarkeit oder die Verschwenkbarkeit durch eine elastische Anbindung zwischen dem Bremssattel und der Radnabe oder -achse zu realisieren.

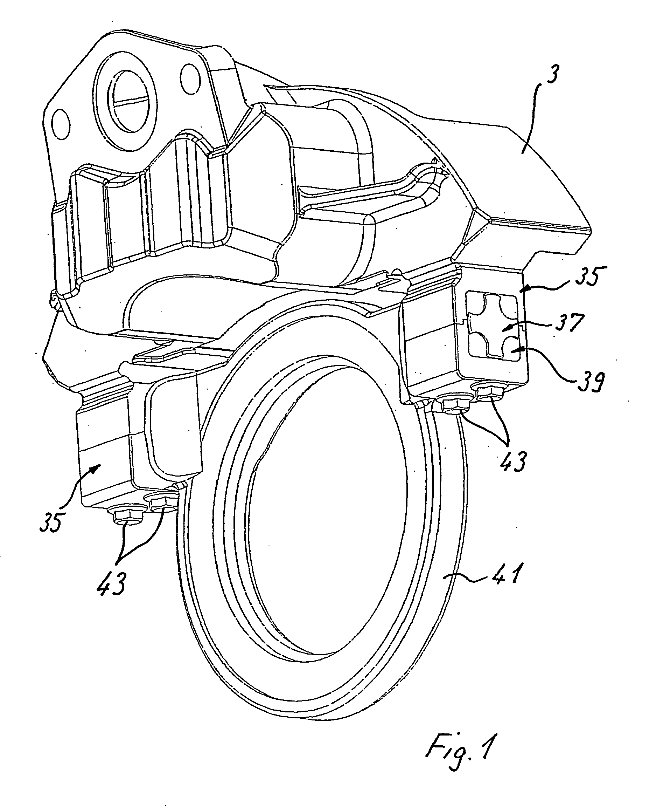

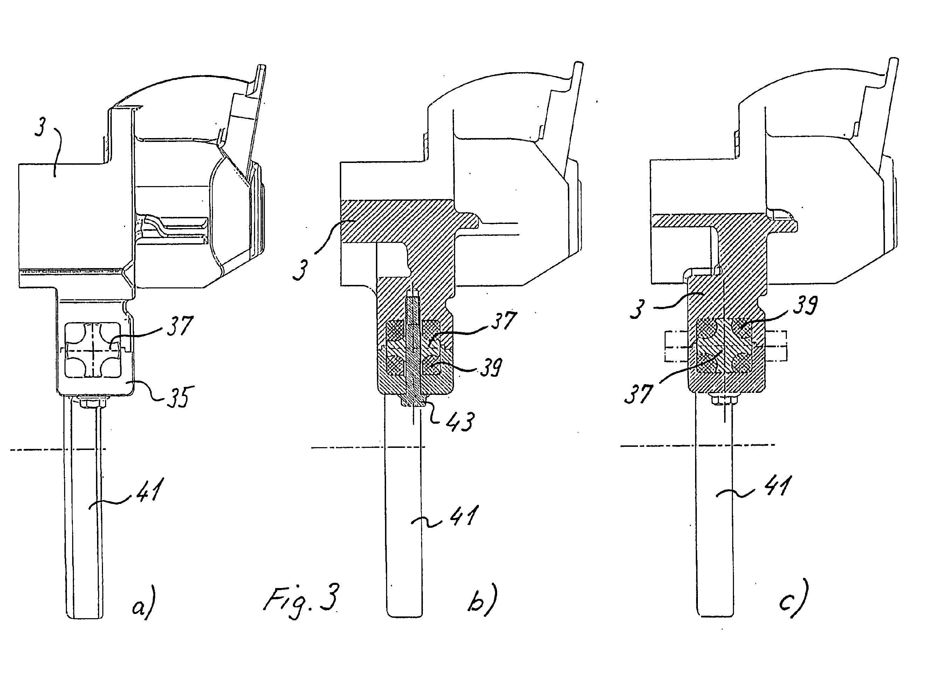

Nach Fig. 1 und 3 weist der Bremssattel 3 an seiner unteren, im Einbauzustand zur Radachse weisenden Seite wenigstens eine, vorzugsweise zwei, Lageraufnahmen 35 auf und an der Radachse oder nabe ist/sind wenigstens eines, vorzugsweise zwei Tragelement(e) 37 angeordnet, wobei zwischen Lageraufnahme 35 und Tragelement 37 jeweils wenigstens ein elastisch verformbares Zwischenelement 39 vorgesehenangeordnet - ist. Die Tragelemente greifen jeweils in Ausnehmungen oder Bohrungen der Zwischenelemente ein.

Denkbar ist auch eine umgekehrte Anordnung - hier nicht dargestellt - bei welcher der Bremssattel die Tragelemente aufweist, und wobei an der Radachse oder nabe die Lageraufnahmen angeordnet sind, wobei zwischen Lageraufnahme und Tragelement jeweils wenigstens ein elastisch verformbares Zwischenelement vorgesehen - angeordnet - ist, welches in die wenigstens eine Lageraufnahme eingreift.

Wird z.B. das Verschwenken nicht über herkömmliche Drehlager sondern über eine elastische Anbindung zwischen Sattel und Achse realisiert, ergibt sich das Problem, daß der Bremssattel 3 in Schwenkrichtung möglichst ohne Widerstand leicht beweglich sein soll, wobei andererseits in Umfangsrichtung eine hohe Steifigkeit zur Aufnahme der Umfangskräfte erforderlich ist. Da die Umfangskräfte - bedingt durch die Einbauverhältnisse an Fahrzeugachsen - in einem relativ großen Abstand vom Schwenkdrehpunkt des Sattels eingreifen - bewirken sie aufgrund der bestehenden Elastizität eine Schrägstellung des Bremssattels 3 zur Bremsscheibe 1, was einen stark überhöhten und gleichmäßigen Verschleiß der Bremsbeläge und ggf. eine Beschädigung von Bremsenbauteilen zur Folge hat.

Diese Probleme werden mit der Erfindung bei bevorzugten Ausführungsbeispielen ebenfalls vermieden.

So ist es durch die zwei Tragelemente 37 möglich - insbesondere dann, wenn diese einen großen Abstand voneinander haben und ggf. zusätzlich durch eine unmittelbare Kraftübertragung von den Lageraufnahmen 35 des Bremssattels 3 auf die Tragelemente 37 - eine hohe Steifigkeit der Abstützung zu erzielen, während die Schwenkbewegung durch die elastische Verformung der Zwischenelemente 39 mit nur geringem Widerstand möglich ist.

Hierzu sei wiederum auf Figur 1 verwiesen.

Wie zu erkennen, ist an einem Achsring 41, der an einer Radachse oder -nabe befestigbar ist oder selbst einen Teil dieser Elemente darstellen kann, im oberen seitlichen Umfangsbereich an einander gegenüberliegenden Stellen des Achsringes jeweils eines der Tragelemente 37 ausgebildet, was auch aus der Sprengancicht der Figur 3 gut erkennbar ist.

Diese Tragelemente 37 weisen hier im wesentlichen einen bolzenartige Form und einen kreuzförmigen Querschnitt auf. Sie sind voneinander abgewandt ausgerichtet, d.h. sie liegen hier an zwei voneinander beabstandeten Umfangsstellen des Achsringes 41 jeweils quasi in Verlängerung einer Sehne durch den Achsring und weisen dabei jeweils mit ihren freien Enden um 180° voneinander weg.

Die Lageraufnahmen 35 sind an entsprechenden, hier unteren, voneinander beabstandeten Stellen des Bremssattels 3 angeordnet. Sie sind hier jeweils zur Montagerleichterung zweiteilig ausgebildet und bestehen aus ersten Lagerausnehmungsabschnitten 35a, die jeweils direkt an dem Bremssattel 3 angegossen sind, sowie aus weiteren Lagerausnehmungsabschnitten 35b.

Die Lagerausnehmungsabschnitte 35a und 35b weisen jeweils einen in der Seitenansicht U-förmigen Querschnitt auf. Im zusammengesetzten Zustand weist der Innenraum der Lageraufnahmen 35 hier einen rechteckigen Querschnitt auf. Die Tragelemente 37 greifen jeweils in die Lageraufnahmen 35 am Bremssattel 3 ein.

Mittels jeweils zweier Bolzen 43, welche sowohl die zweiten Lagerausnehmungsabschnitte 35b als auch die Tragelemente 37 durchsetzen, sind die in Fig. 1 unteren bzw. zweiten Lagerausnehmungen 35b und die Tragelemente 37 an den ersten Lagerausnehmungen 35a verschraubbar, wobei die Schraubbolzen ferner die elastisch verformbaren Zwischenelemente 39 durchsetzen, welche nach Art einer Buchse ausgestaltet sind, die in ihrer Kontur dem Außendurchmesser der Tragelemente 37 angepaßt sind, d.h. die vom Außenquerschnitt her rechteckigen bzw. hier sogar quadratischen Zwischenelementbuchsen weisen einen im wesentlichen kreuzförmigen Innenquerschnitt auf. Die Bolzen sind derart dimensioniert, dass die notwendige Relativbewegung zwischen den Bauelementen zum Verschieben oder Verschwenken des Bremssattels 3 realisierbar ist.

Dabei erfolgt eine Dimensionierung derart, daß die Tragelemente 37 radiale Kontaktflächen haben, die mit entsprechenden Gegenflächen der Lageraufnahmen mit geringem Spiel in direktes die Radialkräfte übertragenden Kontakt stehen. So sind die Tragelemente 37 am radialen Außenumfang der Kreuzform jeweils leicht abgerundet ausgebildet. Durch die große Stützbreite der sich hieraus ergebenden beiden Schwenkzonen zwischen Tragelementen 37 und Lagerausnahmen 35 ergibt sich eine besonders gute Abstützung gegen Kräfte, welche den Bremssattel 3 um seine Hochachse verdrehen können.

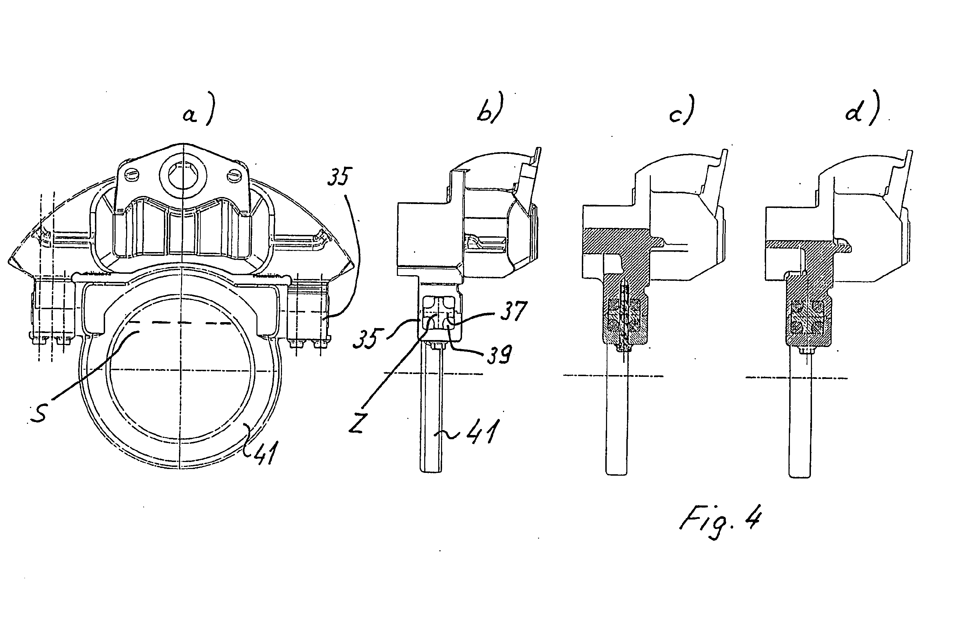

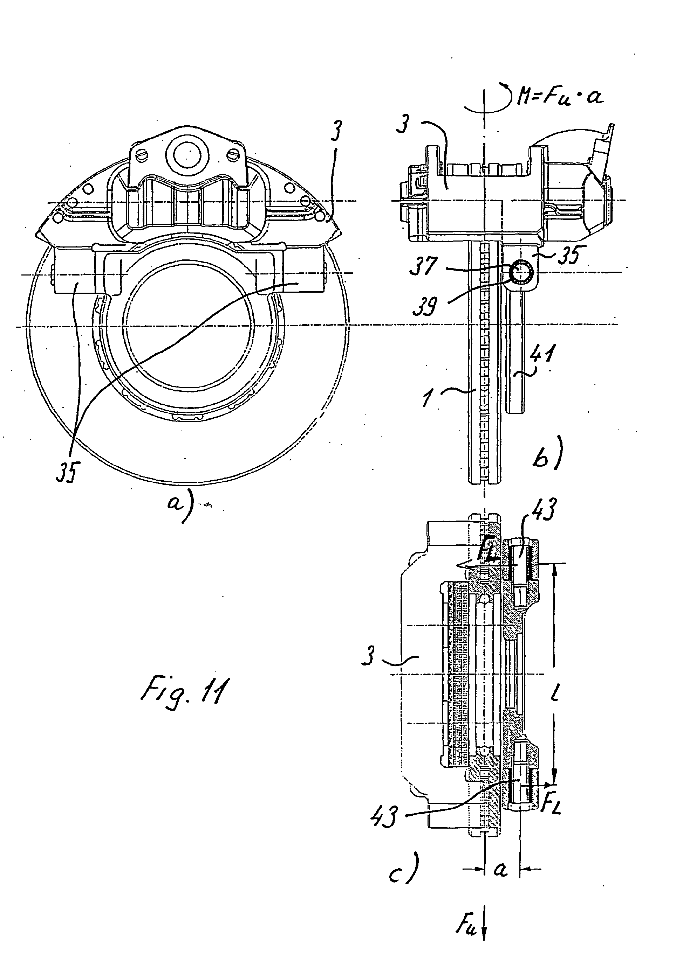

Die Schwenkbewegung des Bremssattels erfolgt dagegen um das Drehzentrum z (Fig. 4b) der Tragelemente 37 durch elastische Verpressung der Zwischenelemente. 39 (siehe z.B. Fig. 11). Die Zwischenelemente 39 werden insbesondere als einstückiges Formteil ausgebildet und bestehen vorzugsweise aus einem geeigneten Elastomermaterial. Die übernehmen dabei auch die hermetische Abdichtung der elastischen Schwenklagerung nach außen hin.

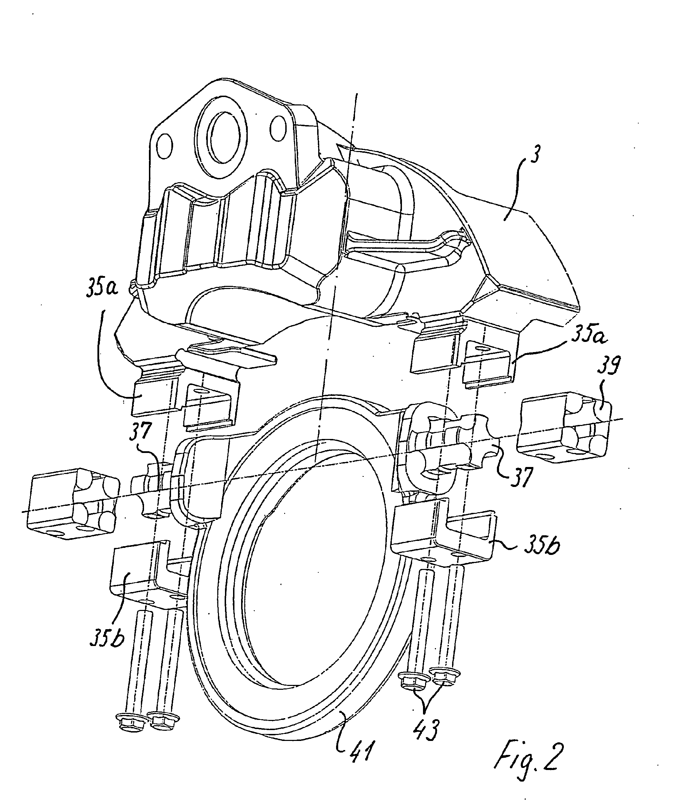

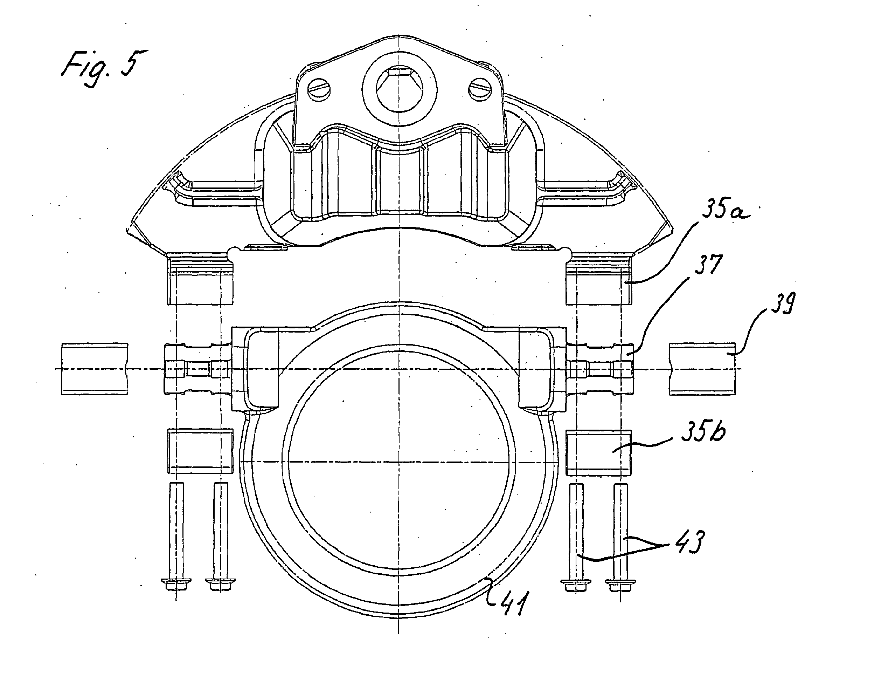

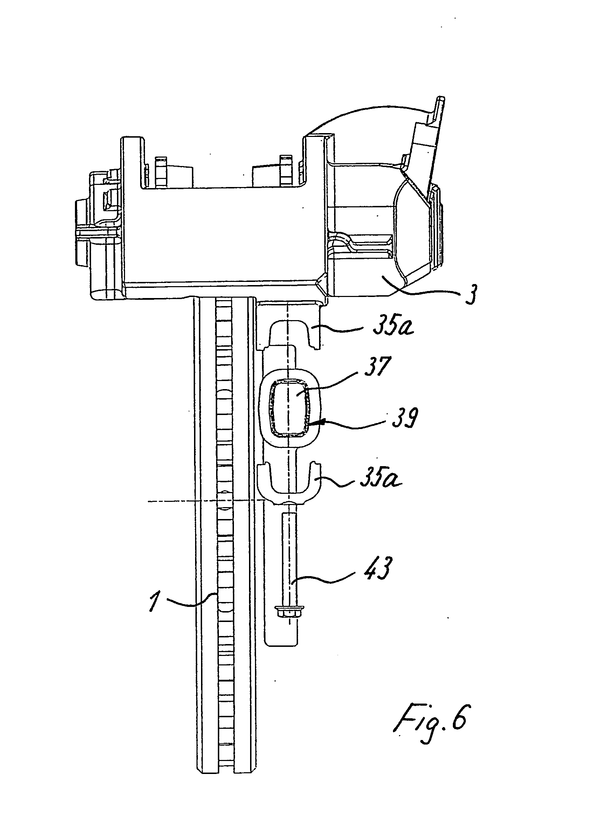

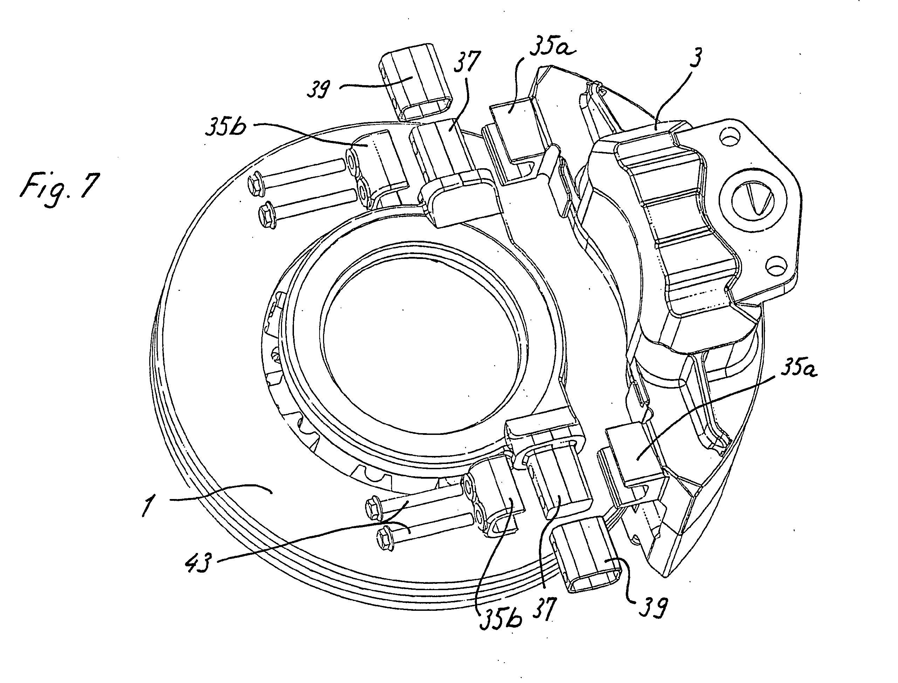

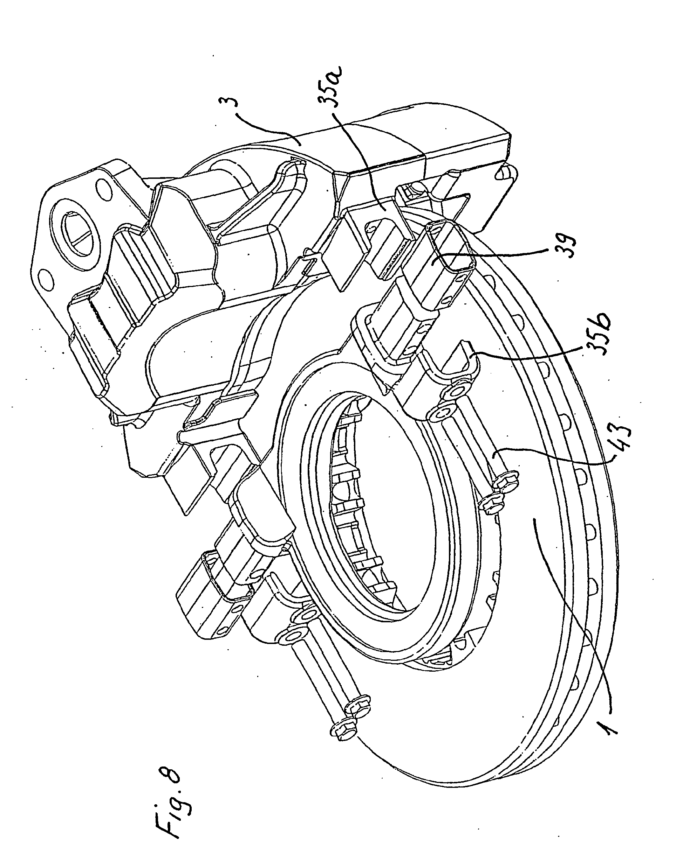

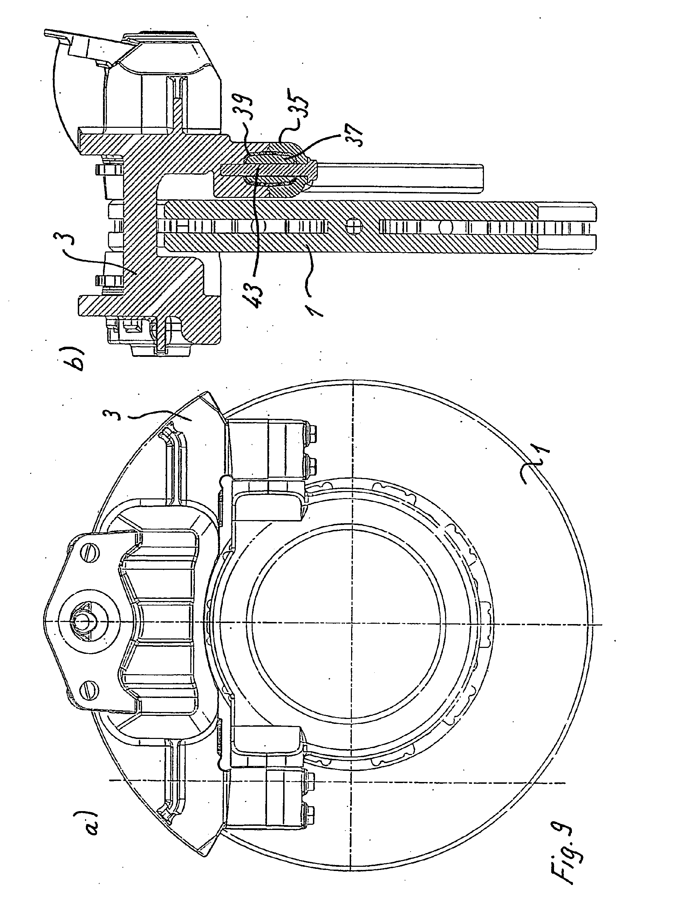

Die Ausführungsbeispiele der Figuren 6 bis 9 unterscheiden sich von denen der Figur 1 bis 5 dadurch, daß die Tragelemente 37 hier einen polygonförmigen Querschnitt aufweisen und über ein elastisch verformbares Zwischenelement 39 in Form einer elastischen Hülse in die Lageraufnahmen 35 eingreifen. Die Hülse bzw. Buchse dient wieder als elastisch verformbares Zwischenelement 37. Bei der Ausführung der Schwenkbewegung wird diese Hülse sowohl einer Verpressung als auch einer Scherbeanspruchung ausgesetzt. Die Hülse wird bevorzugt wiederum aus einem Elastomer gefertigt.

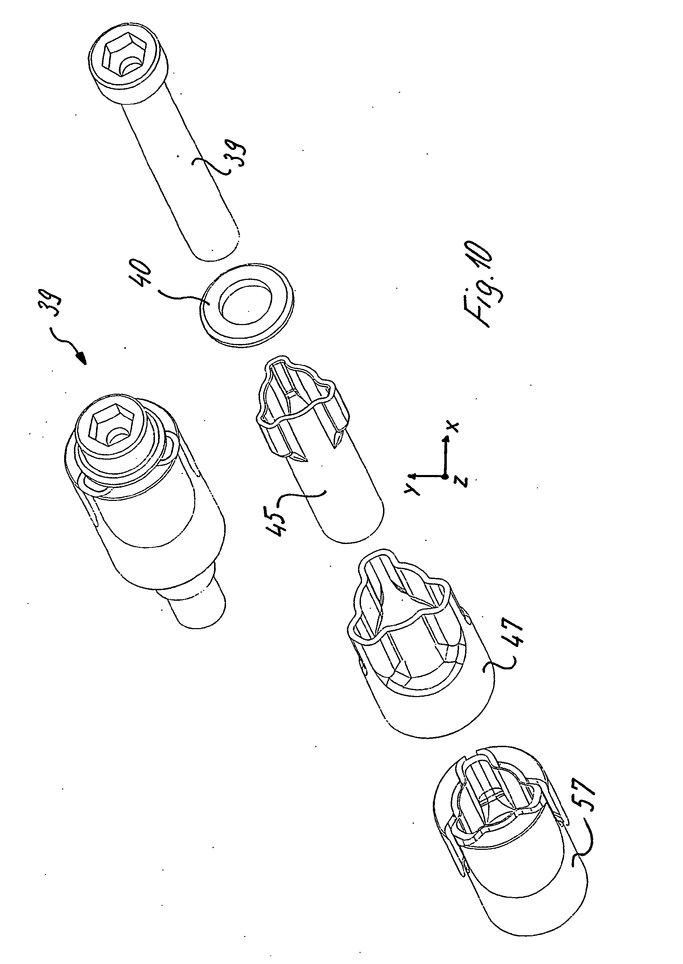

Figur 10 zeigt ein Zwischenelement 39 als Gummi-Metall-Verbundteil, wobei eine vorzugsweise aus Stahlblech hergestellte Innenbuchse 45 mit einer entsprechenden Außenbuchse 47, vorzugsweise aus Stahlblech, zusammenwirkt, und zwar vorzugsweise über ein nicht kreisförmiges Profil und wobei zwischen die beiden Buchsen 45, 47 als elastisches Zwischenelement 39 ein Elastomermaterial 57 gespritzt ist. Diese Ultrabuchse wird über eine Schraube 39 mit Scheibe 40 mit einem Achsring 41 verbunden. Im oberen Teil der Fig. 10 ist das komplett vormontierte Zwischenelement 39 zu erkennen.

Fig. 11 veranschaulicht die Ausrichtung der Lager senkrecht zur Bremsscheibenachse. Fl ist die Lagerreaktionskraft, 1 der Lagerabstand. Fu ist die reasultierende Umfangskraft beider Bremsbacken. "a" ist der kleinste Abstand zwischen der Mittelebene der Bremsscheibe 1 und der Mittelsenkrechten zwischen den Tragelemente. Dabei gilt:

$$\dot{M} = Fu * a = Fl * l$$

Die Lagerreaktionskraft ist also umso kleiner, je kleiner der Abstand "a" und je größer die Stützbreite "1" ist.

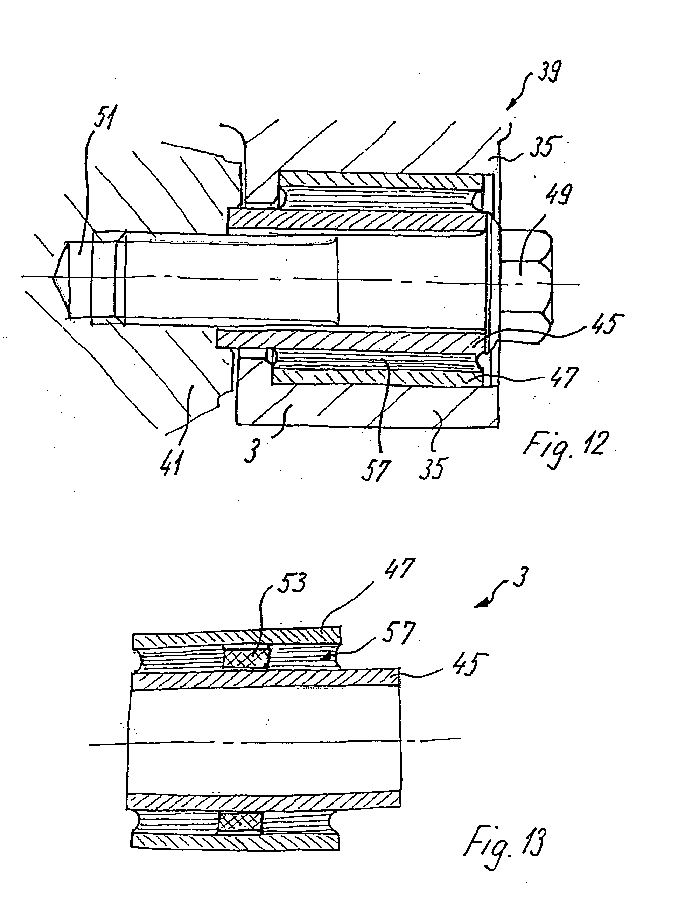

Figur 12 zeigt ein weiteres Ausführungsbeispiel der Erfindung. Dabei sind die elastisch verformbaren Zwischenelemente 39 - z.B. einsetzbar nach Art der Fig. 10) wiederum als Gummi-Metall-Verbundbuchsen ausgeführt (Ultrabuchsen genannt), welche über je eine Schraube 49 mit je einem Zentrieransatz 51 mit der Achse - z.B. einem Achsring 41 - verbunden sind. Die achsseitigen Zentrieransätze der Schrauben bilden wiederum die Tragelemente 37 aus. Das Elastomermaterial 57 ist zwischen die metallische Innen- und eine Außenbuchse 45, 47 gespritzt oder als Elastomerbuchse ausgebildet.

Zur Erhöhung der Steifigkeit in Umfangsrichtung ist es vorteilhaft, ab einer bestimmten radial auf die Lagerung wirkenden Kraft eine unmittelbare Übertragung dieser radial wirkenden Kräfte zur Überbrückung des elastischen Zwischenelementes zu bewirken. Dies wird nach Figur 13 dadurch erreicht, daß zwischen Innen- und Außenbuchse 45, 47 hier mittig mindestens ein (Anschlag-)Ring 53 angeordnet ist, der in seinen Innendurchmessern so gewählt ist, daß er die mögliche Relativbewegung zwischen Innen- und Außenbuchse begrenzt, d.h., zwischen dem Anschlagring 53 und den Buchsen 45, 47 besteht ein entsprechend dimensioniertes Spiel..

Der Ring 53 kann als separates Bauteil aus entsprechend druckfestem Material ausgebildet sein. Da er zweckmäßig längsmittig zwischen Innen- und Außenbuchse im eingespritzten Elastomer angeordnet ist, ist es sinnvoll den Ring 53 am inneren oder äußeren Durchmesser bzw. Umfang mit Längsnuten 55 zu versehen, um so eine bessere Verbindung mit dem Elastomer und ein besseres Fließen desselben beim Herstellprozeß zu erzielen.

Der Ring 53 kann jedoch auch als umlaufender oder segmentweise unterbrochener Ring 53 einstückig mit der Innen- oder Außenbüchse ausgeführt sein. Zur Realisierung der Schwenkbewegung wird die Innenbuchse gegen die Außenbuchse verdreht, wobei das zwischen Innen- und Außenbuchse befindliche Elastomer hierbei einer elastischen Scherspannung ausgesetzt ist.

Zurückkommend auf Figur 14 ist festzustellen, daß hier das elastische Lager derart ausgebildet ist, daß es koaxial zur Bremsscheiben-Symmetrieachse angeordnet ist, d.h. es fmdet im wesentlichen keine Schwenkbewegung um eine Lagerdrehachse statt, sondern eine elastische Längsverschiebbarkeit des Sattels mit einer elastischen Schwenkbarkeit quer zur Längsachse der hier als Lager 59 vorgesehenen Ultrabuchse.

Das elastische Lager 59 der Fig. 14a weist einen ersten Elastomerabschnitt 61, einen sich daran anschliessenden Ring 63 mit Spiel zwischen Ausnehmung 35 und Tragelement 37 in Form von Schraubbolzen und einen zweiten Elastomerabschnitt 65 auf.

Nach Fig. 14b ist anstelle des Ringes 63 ein dritter Elastomerabschnitt 67 vorgesehen, wobei die Ultrabuchse wiederum Innen- und Außenbuchse 45, 47 aufweist, wobei die Außenbuchse gestuft ausgebildet ist und die beiden äußeren Elastomerabschnitte am Außenumfang und dann im Anschluß an eine Stufung die mittlere Elastomerbuchse am Innenumfang einfasst.

Hierbei wird die Bewegung des Bremssattels zum Ausgleich der Elastizität nicht ausschließlich als Schwenkbewegung ausgeführt, wodurch insbesondere Anpassungsbremsungen mit nahezu reiner Längsverschiebung des Bremssattels ausgeführt werden und nur die selten auftretenden Bremsungen mit hohen Bremskräften das Verschwenken des Bremssattels erfordern. Durch diese Maßnahme werden die Verschleißbedingungen der Bremsbeläge und damit deren Lebensdauer deutlich verbessert, da die beim Schwenksattel auftretende Radialverschiebung insbesondere des äußeren Bremsbelages während des Bremsvorganges reduziert und bei Anpassungsbremsungen sogar vermieden wird.

Bezugszeichen

| | |
|---|---|
| Bremsscheibe | 1 |
| Bremssattel | 3 |
| Zuspannvorrichtung | 5 |
| Öffnung | 7 |
| Drehhebel | 9 |
| Zwischenelement | 11 |
| halbkugelartiger Ansatz | 13 |
| Gleitlagerschale | 14 |
| Nachstellmutter | 15 |
| Stellspindel | 17 |
| Druckstück | 19 |
| Belaghalteplatte | 21 |
| Bremsbelag | 23 |
| Halteplatten | 25, 27 |
| Dichtung | 29 |
| Zahnrad | 31 |
| Bremsbelag | 33 |
| Lageraufnahmen | 35 |
| Lagerausnehmungsabschnitt | 35a, 35b |
| Tragelemente | 37 |
| Zwischenelement | 39 |
| Achsring | 41 |
| Bolzen | 43 |
| Innenbuchse | 45 |
| Außenhülse | 47 |
| Schrauben | 49 |
| Zentrieransatz | 51 |
| Ring | 53 |

| Längsnut | 55 |
| Elastomermaterial | 57 |
| elastisches Lager | 59 |
| Elastomerabschnitte | 61,65 |
| Ring | 63 |
| dritter Elastomerabschnitt | 67 |
| Buchse | 69 |

**Patentansprüche**

1. Scheibenbremse, mit

   a) einem eine Bremsscheibe (1) übergreifenden ein- oder mehrteiligen, relativ zu einer Radachse oder -nabe verschwenk- oder verschiebbaren Bremssattel (3),
   b) einer im Bremssattel (3) angeordneten Zuspanneinrichtung (5) zum Zuspannen der Bremse, die einen von einer Kolbenstange betätigbaren Drehhebel (9) aufweist,
   c) jeweils wenigstens einer Nachstellvorrichtung auf beiden Seiten der Bremsscheibe, insbesondere mit wenigstens einer Nachstell-Dreheinrichtung auf jeder Seite der Bremsscheibe, auf die jeweils ein elektromotorischer oder mechanischer Antrieb einwirkt,
   d) wobei der Bremssattel (3) insbesondere an seiner unteren, im Einbauzustand zur Radachse weisenden Seite Tragelemente aufweist und wobei an der Radachse oder -nabe Lageraufnahmen angeordnet sind, oder wobei an der Radachse die Tragelemente und am Bremssattel die Lageraufnahmen angeordnet sind,
   e) zwischen Lageraufnahme und Tragelement jeweils wenigstens ein elastisch verformbares Zwischenelement angeordnet ist, welches in die wenigstens eine Lageraufnahme eingreift, das jeweils relativ zur Lageraufnahme (35) nur derart beweglich ist, dass der Verschwenkwinkel oder der Verschiebeweg des Bremssattels eine Überbrückung des maximalen Arbeitshubes der Scheibenbremse im Bereich der Bremsbeläge ermöglicht, **dadurch gekennzeichnet, dass**
   f) das wenigstens eine elastische Zwischenelement (39) eine Buchsenform aufweist und aus einem Elastomer besteht.

2. Scheibenbremse nach einem der vorstehenden Ansprüche, **dadurch gekennzeichnet, dass** die Tragelemente (37) jeweils in eine der Lageraufnahmen (35) eingreifen, wobei die elastischen Zwischenelemente (39) jeweils zwischen den Tragelementen (37) und den Lageraufnahmen (35) angeordnet sind.

3. Scheibenbremse nach einem der vorstehenden Ansprüche, **dadurch gekennzeichnet, dass** zwei der Tragelemente (37) an der Radachse oder -nabe, insbesondere an einem Achsring (41), angeordnet, insbesondere angeformt sind.

4. Scheibenbremse nach einem der vorstehenden Ansprüche, **dadurch gekennzeichnet, dass** die Tragelemente (37) bolzenförmig ausgebildet und mit einem ihrer Enden an die Radachse oder -nabe angeformt sind.

5. Scheibenbremse nach einem der vorstehenden Ansprüche, **dadurch gekennzeichnet, dass** die freie Enden von zweien der Tragelemente (37) in Verlängerung einer Kreissehne durch den Achsring (41) an den beiden Schnittstellen der Kreissehne mit dem Achsring (41) angeordnet sind und mit ihren freien Enden voneinander weg weisen.

6. Scheibenbremse nach einem der vorstehenden Ansprüche, **dadurch gekennzeichnet, dass** die Tragelemente (37) einen polygonförmige Querschnitt aufweisen.

7. Scheibenbremse nach einem der vorstehenden Ansprüche, **dadurch gekennzeichnet, dass** die Tragelemente (37) einen kreuzförmigen Querschnitt aufweisen.

8. Scheibenbremse nach einem der vorstehenden Ansprüche, **dadurch gekennzeichnet, dass** die Tragelemente (37) als Schraubbolzen ausgebildet sind, welche in den Achsring einschraubbar sind.

9. Scheibenbremse nach einem der vorstehenden Ansprüche, **dadurch gekennzeichnet, dass** die Schraubbolzen Zentrieransätze (51) aufweisen, welche in den Achsring (41) einschraubbar sind.

**10.** Scheibenbremse nach einem der vorstehenden Ansprüche, **dadurch gekennzeichnet, dass** die Lageraufnahmen (35) aus zwei zusammensetzbaren, insbesondere miteinander verschraubbaren Lageraufnahmeabschnitten (35a, b) bestehen.

**11.** Scheibenbremse nach einem der vorstehenden Ansprüche, **dadurch gekennzeichnet, dass** jede der Nachstellvorrichtungen auf beiden Seiten der Bremsscheibe (1) wenigstens eine, vorzugsweise zwei Nachstelldreheinrichtungen aufweist.

**12.** Scheibenbremse nach einem der vorstehenden Ansprüche, **dadurch gekennzeichnet, dass** die Tragelemente (37) radiale Kontaktflächen aufweisen, welche mit entsprechenden Gegenflächen der Lageraufnahmen (35) mit geringem Spiel in direktem die Radialkräfte übertragenden Kontakt stehen.

**13.** Scheibenbremse nach einem der vorstehenden Ansprüche, **dadurch gekennzeichnet, dass** die Tragelemente (37) am radialen Außenumfang jeweils leicht abgerundet ausgebildet sind.

**14.** Scheibenbremse nach einem der vorstehenden Ansprüche, **dadurch gekennzeichnet, dass** das wenigstens eine Zwischenelement (39) als Gummi-Metall-Verbundteil ausgelegt ist.

**15.** Scheibenbremse nach einem der vorstehenden Ansprüche, **dadurch gekennzeichnet, dass** über eine vorzugsweise aus Stahlblech hergestellte Innenbuchse (45) eine Außenbuchse (47) gesetzt ist, wobei zwischen die beiden Buchsen (45, 47) als das elastische Zwischenelement (39) jeweils ein Elastomermaterial (57) gespritzt oder eingeschoben ist.

**16.** Scheibenbremse nach einem der vorstehenden Ansprüche, **dadurch gekennzeichnet, dass** das Gummi-Metall-Verbundteil mit einer Schraube (49) mit einem Zentrieransatz (51) mit der Radachse oder wiederum mit einem Achsring (41) verbunden ist, so dass die Zentrieransätze (51) der Schrauben (49) die Tragelemente (37) ausbilden.

**17.** Scheibenbremse nach einem der vorstehenden Ansprüche, **dadurch gekennzeichnet, dass** zwischen Innen- und Außenbuchse (45, 47) mit Spiel ein Ring (53) angeordnet ist, der in seinen Durchmessern so gewählt ist, daß er die mögliche Relativbewegung zwischen Innen- und Außenbuchse begrenzt.

**18.** Scheibenbremse nach einem der vorstehenden Ansprüche, **dadurch gekennzeichnet, dass** die Nachstelldreheinrichtungen jeweils eine Nachstellmutter (15) aufweisen, in welche eine Stellspindel (17) eingeschraubt ist, wobei an der Nachstellmutter oder der Stellspindel ein Druckstück (19) angeordnet ist, welches auf einen der Bremsbeläge einwirkt.

**19.** Scheibenbremse nach einem der vorstehenden Ansprüche, **dadurch gekennzeichnet, dass** die Innenbuchse (45) und die Außenbuchse (47) über ein nicht kreisförmiges Profil zusammenwirken.

**20.** Scheibenbremse nach einem der vorstehenden Ansprüche, **dadurch gekennzeichnet, dass** die Innenbuchse (45) und die Außenbuchse (47) eine zylindrische Form aufweisen.

**21.** Scheibenbremse nach einem der vorstehenden Ansprüche, **dadurch gekennzeichnet, dass** die Innenbuchse (45) und die Außenbuchse (47) aus Metall, insbesondere Stahlblech bestehen.

**22.** Scheibenbremse nach einem der vorstehenden Ansprüche, **dadurch gekennzeichnet, dass** die Lagerausnehmungen (35), die Tragelemente (37) und das elastische Zwischenelement (39) jeweils derart ausgerichtet sind, dass jeweils ein elastisches Lager ausgebildet wird, welches koaxial zur Bremsscheibenachse ausgerichtet ist

**23.** Scheibenbremse nach einem der vorstehenden Ansprüche, **dadurch gekennzeichnet, dass** die Lagerausnehmungen (35), die Tragelemente (37) und das elastische Zwischenelement (39) jeweils derart ausgerichtet sind, dass jeweils ein elastisches Lager ausgebildet wird, welches senkrecht zur Bremsscheibenachse ausgerichtet ist.

**Claims**

**1.** Disc brake comprising

(a) a single-part or multi-part brake calliper (3) enclosing a brake disc (1), which is adapted to be pivoted or displaced relative to a wheel axle or hub,

(b) a brake applicator means (5) disposed in said brake calliper (3) for applying the brake, which includes a rotary lever (9) operable by a piston rod,

(c) at least one respective re-adjusting device on both sides of said brake disc, in particular including at least one re-adjusting rotary means on either side of said brake disc, onto which a respective drive system acts by electromotive or mechanical force,

(d) wherein said brake calliper (3) presents supporting elements, in particular at its lower side facing towards the wheel axle in the mounted condition, and wherein bearing reception means are disposed on said wheel axle or hub, or wherein said bearing reception means are disposed on said supporting elements and on said brake calliper,

(e) wherein at least one respective elastically deformable interposed element is disposed between one of said bearing reception means and a supporting element, which engages into said at least one bearing reception means and which is movable, relative to said bearing reception means (35) only in such a way that the pivoting angle or the displacement distance of said brake calliper permits bridging of the maximum working stroke of the disc brake in the region of the brake linings,

**characterised in that**

(f) said at least one interposed element (39) presents the shape of a bush and consists of an elastomer.

2. Disc brake according to any of the preceding Claims, **characterised in that** said supporting elements (37) engage each into one of said bearing reception means

3. Disc brake according to any of the preceding Claims, **characterised in that** two of said supporting elements (37) are disposed, in particular integrally formed, on said wheel axle or hub, particularly on an axle ring (41).

4. Disc brake according to any of the preceding Claims, **characterised in that** said supporting elements (37) have a bolt-shaped configuration and are integrally formed on said wheel axle or hub by one of their ends.

5. Disc brake according to any of the preceding Claims, **characterised in that** the free ends of two of said supporting elements (37) are disposed in the extension of a circle chord passing through said axle ring (41) at the two points of intersection of said circle chord avec said axle ring (41), while their free ends are oriented away from each other.

6. Disc brake according to any of the preceding Claims, **characterised in that** said supporting elements (37) present a cross-section in the form of a polygon.

7. Disc brake according to any of the preceding Claims, **characterised in that** said supporting elements (37) present a cruciform cross-section.

8. Disc brake according to any of the preceding Claims, **characterised in that** said supporting elements (37) are designed as bolts adapted to be screwed into said axle ring..

9. Disc brake according to any of the preceding Claims, **characterised in that** said bolts present centring lugs (51) adapted to be screwed into said axle ring (41).

10. Disc brake according to any of the preceding Claims, **characterised in that** said bearing reception means (35) consist of two bearing receiving segments (35a, b) adapted to be assembled, in particular to be screwed, to each other.

11. Disc brake according to any of the preceding Claims, **characterised in that** each of said re-adjusting devices presents at least one, preferably two, re-adjusting rotary means on both sides of said brake disc (1).

12. Disc brake according to any of the preceding Claims, **characterised in that** said supporting elements (37) present radial contact surfaces in direct contact with appropriate matching surfaces of said bearing reception means (35) with a slight play, which contact transfers the radial forces.

13. Disc brake according to any of the preceding Claims, **characterised in that** each of said supporting elements (37) is so configured that is has a slight rounding on the radial outer periphery.

14. Disc brake according to any of the preceding Claims, **characterised in that** at least one interposed element (39) is designed as rubber/metal compound part.

15. Disc brake according to any of the preceding Claims, **characterised in that** an outer bush (47) is placed over an inner bush (45) preferably made of steel sheet, with a respective elastomer material (57) being injected or inserted between said two bushes (45, 47) as said resilient interposed element (39).

16. Disc brake according to any of the preceding Claims, **characterised in that** said rubber/metal compound part is connected by means of a screw (49) to a centring lug (51) to said wheel axle or, in its turn, to an axle ring (41) such that said centring lugs (51) of said screws (49) constitute said supporting elements (37).

17. Disc brake according to any of the preceding Claims, **characterised in that** a ring (53) is disposed between said inner and outer bushes (45, 47) with a play, with the diameters of said ring being so selected that the ring restricts the possible relative movement between said inner and outer bushes.

18. Disc brake according to any of the preceding Claims, **characterised in that** each of said re-adjusting rotary means presents a re-adjusting nut (15) into which an adjusting spindle (15) is screwed, with a pressure element (19) being disposed on said re-adjusting nut or said adjusting spindle, which acts upon one of said brake linings.

19. Disc brake according to any of the preceding Claims, **characterised in that** said inner bush (45) and said outer bush (47) cooperate with each other via a non-circular profile.

20. Disc brake according to any of the preceding Claims, **characterised in that** said inner bush (45) and said outer bush (47) present a cylindrical shape.

21. Disc brake according to any of the preceding Claims, **characterised in that** said inner bush (45) and said outer bush (47) are made of metal, in particular steel sheet.

22. Disc brake according to any of the preceding Claims, **characterised in that** said bearing recesses (35), said supporting elements (37) and said resilient interposed element (39) are each so oriented that a respective resilient bearing is formed which is oriented coaxially relative to the axis of said brake disc.

23. Disc brake according to any of the preceding Claims, **characterised in that** said bearing recesses (35), said supporting elements (37) and said resilient interposed element (39) are each so oriented that a respective resilient bearing is formed which is oriented orthogonally on the axis of said brake disc.

**Revendications**

1. Frein à disque comprenant

(a) un étrier de frein (3) monobloc ou à plusieurs parties, chevauchant un disque de frein (1), qui est apte à être pivoté ou déplacé relativement à un essieu ou moyeu de roue,
(b) un moyen de serrage de frein (5) disposé dans ledit étrier de frein (3) à serrer le frein, qui renferme un levier rotatif (9) commandable par une tige de piston,
(c) au moins un dispositif de rattrapage respectif des deux côtés dudit disque de frein, renfermant, en particulier, au moins un moyen rotatif de rattrapage de chaque côté dudit disque de frein, sur lequel agit un système d'entraînement respectif par effort électromoteur ou mécanique,
(d) dans lequel ledit étrier de frein (3) présente des éléments d'appui, en particulier à sa face inférieure tournée vers l'essieu de roue en état monté, et dans lequel des moyens récepteurs de palier sont disposés audit essieu ou moyeu de roue, ou dans lequel lesdits moyens récepteurs de palier sont disposés auxdits éléments d'appui et audit étrier de frein,
(e) dans lequel au moins un élément intermédiaire respectif, qui est élastiquement déformable, est disposé entre un desdits moyens récepteurs de palier et un élément d'appui, qui se trouve en prise dans ledit au moins un moyen récepteur de palier et qui n'est mobile, relativement audit moyen récepteur de palier (35), que d'une telle façon, que l'angle de pivotement ou la distance de déplacement dudit étrier de frein permet le pontage de la course de travail du frein à disque dans la zone des garnitures du frein,
**caractérisé en ce**
(f) **que** ledit au moins un élément intermédiaire (39) présente la forme d'une douille et consiste en un élastomère.

**2.** Frein à disque selon une quelconque des revendications précédentes, **caractérisé en ce que** lesdits éléments d'appui (37) se trouvent, chacune, en prise dans un desdits moyens récepteurs de palier

**3.** Frein à disque selon une quelconque des revendications précédentes, **caractérisé en ce que** deux desdits éléments d'appui (37) sont disposés, in particulier formé de manière intégrale, audit essieu ou moyeu de roue, en particulier à une frette (41).

**4.** Frein à disque selon une quelconque des revendications précédentes, **caractérisé en ce que** lesdits éléments d'appui (37) ont une configuration en boulon et sont formés, de manière intégrale, audit essieu ou moyeu de roue par une de leurs extrémités.

**5.** Frein à disque selon une quelconque des revendications précédentes, **caractérisé en ce que** les extrémités libres de deux desdits éléments d'appui (37) sont disposées dans le prolongement d'une corde de cercle passant par ladite frette (41) aux deux points d'intersection de ladite corde de cercle avec ladite frette (41), pendant que leurs extrémités libres sont orientées en divergence l'une de l'autre.

**6.** Frein à disque selon une quelconque des revendications précédentes, **caractérisé en ce que** lesdits éléments d'appui (37) présentent une coupe en travers sous forme d'un polygone.

**7.** Frein à disque selon une quelconque des revendications précédentes, **caractérisé en ce que** lesdits éléments d'appui (37) présentent une coupe en travers en forme de croix.

**8.** Frein à disque selon une quelconque des revendications précédentes, **caractérisé en ce que** lesdits éléments d'appui (37) sont conçus en tant que des boulons aptes à être vissé dans ladite frette..

**9.** Frein à disque selon une quelconque des revendications précédentes, **caractérisé en ce que** lesdits boulons présentent des bouts de centrage (51) aptes à être vissé dans ladite frette (41).

**10.** Frein à disque selon une quelconque des revendications précédentes, **caractérisé en ce que** lesdits moyens récepteurs de palier (35) consistent en deux segments récepteurs de palier (35a, b) aptes à être assemblé, en particulier vissé, l'un à l'autre.

**11.** Frein à disque selon une quelconque des revendications précédentes, **caractérisé en ce que** chacun desdits dispositifs de rattrapage présente au moins un, de préférence deux, moyen(s) rotatif(s) de rattrapage des deux côtés dudit disque de frein (1).

**12.** Frein à disque selon une quelconque des revendications précédentes, **caractérisé en ce que** lesdits éléments d'appui (37) présentent des surfaces radiales de contact en contact direct avec des faces antagonistes appropriées desdits moyens récepteurs de palier (35) à un petit jeu, ce contact servant à transférer les efforts radiaux.

**13.** Frein à disque selon une quelconque des revendications précédentes, **caractérisé en ce que** chacun desdits éléments d'appui (37) est configuré d'une telle façon, qu'il soit légèrement arrondi à sa périphérie radiale extérieure.

**14.** Frein à disque selon une quelconque des revendications précédentes, **caractérisé en ce qu'**au moins un élément intermédiaire (39) est conçu sous forme d'une partie composite en caoutchouc/métal.

**15.** Frein à disque selon une quelconque des revendications précédentes, **caractérisé en ce qu'**une douille extérieure (47) est placée sur une douille intérieure (45) faite, de préférence, en une tôle, à un matériau élastomère respectif (57) étant injecté ou inséré entre lesdits deux douilles (45, 47) en tant que ledit élément intermédiaire élastique (39).

**16.** Frein à disque selon une quelconque des revendications précédentes, **caractérisé en ce que** ladite partie composite en caoutchouc/métal est raccordée, moyennant une vis (49), à un bout de centrage (51), audit essieu de roue ou, de sa part, à une frette (41), d'une telle façon, que lesdits bouts de centrage (51) desdites vis (49) constituent lesdits éléments d'appui (37).

**17.** Frein à disque selon une quelconque des revendications précédentes, **caractérisé en ce qu'**un anneau (53) est disposé entre lesdites douilles intérieure et extérieure (45, 47) à un jeu, aux diamètres dudit anneau étant si choisis, que l'anneau restreint le mouvement relatif possible entre lesdites douilles intérieure et extérieure.

**18.** Frein à disque selon une quelconque des revendications précédentes, **caractérisé en ce que** chacun desdits moyens rotatifs de rattrapage présente un écrou de rattrapage (15), dans lequel se visse une broche de réglage (15), à un élément presseur (19) étant disposé audit écrou de rattrapage ou ladite broche de réglage, qui agit sur une desdites garnitures de frein.

**19.** Frein à disque selon une quelconque des revendications précédentes, **caractérisé en ce que** ladite douille intérieure (45) et ladite douille extérieure (47) coopèrent l'un avec l'autre via un profil autre que circulaire.

**20.** Frein à disque selon une quelconque des revendications précédentes, **caractérisé en ce que** ladite douille intérieure (45) et ladite douille extérieure (47) présentent une forme cylindrique.

**21.** Frein à disque selon une quelconque des revendications précédentes, **caractérisé en ce que** ladite douille intérieure (45) et ladite douille extérieure (47) sont faites en métal, en particulier en tôle.

**22.** Frein à disque selon une quelconque des revendications précédentes, **caractérisé en ce que** chacun desdits évidements de palier (35), desdits éléments d'appui (37) et ledit élément intermédiaire élastique (39) est orienté de façon à former un palier élastique respectif, qui est orienté coaxialement relativement à l'axe dudit disque de frein.

**23.** Frein à disque selon une quelconque des revendications précédentes, **caractérisé en ce que** chacun desdits évidements de palier (35), desdits éléments d'appui (37) et ledit élément intermédiaire élastique (39) est orienté de façon à former un palier élastique respectif, qui est orienté orthogonalement sur l'axe dudit disque de frein.

Fig. 1

Fig. 2

Fig. 3

Fig. 4

Fig. 5

35a

37

39

35b

43

41

Fig.6

Fig. 7

EP 1 476 672 B1

Fig. 8

a)

Fig.9

b)

Fig. 10

Fig. 11

Fig. 12

Fig. 13

a)

Fig. 14

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3371753 A
- EP 0688404 B1
- DE 3610569 C2